# EUROPEAN PATENT APPLICATION

(11) **EP 4 358 241 A1**
(43) Date of publication of application: **24.04.2024**
(21) Application number: 23200828.4
(22) Date of filing: 29.09.2023
(51) Int. Cl.: H01M 50/103, H01M 50/209, H01M 50/224, H01M 50/249

(54) **BATTERY MODULE AND METHOD OF MANUFACTURING SAME**

(30) Priority: 20.10.2022 JP 2022168092
(71) Applicant: Prime Planet Energy & Solutions, Inc., Chuo-ku Tokyo 103-0022 (JP)
(72) Inventor: TSUDA, Yoshihiro, Tokyo, 103-0022 (JP); ABE, Kosyo, Tokyo, 103-0022 (JP); TAKEDA, Takahide, Tokyo, 103-0022 (JP)
(74) Representative: Kuhnen & Wacker Patent- und Rechtsanwaltsbüro PartG mbB

(57) **Abstract**

A battery module (100) includes: a plurality of battery cells (11) arranged side by side in a first direction, each of the plurality of battery cells (11) having a prismatic shape; and two restraint members (43) that restrains the plurality of battery cells (11) along the first direction, each of the two restraint members (43) being provided to be arranged side by side with the plurality of battery cells (11) in a second direction orthogonal to the first direction. Each of the two restraint members (43) includes a plate-shaped portion (431) extending in a plane direction including the first direction and a third direction orthogonal to the first direction and the second direction. The plate-shaped portion (431) is constituted of a metal member (430A) having a rolling line along the third direction, and the plate-shaped portion (431) is provided with an opening (432).

## Description

### CROSS REFERENCE TO RELATED APPLICATIONS

This nonprovisional application is based on Japanese Patent Application No. 2022-168092 filed on October 20, 2022 with the Japan Patent Office, the entire contents of which are hereby incorporated by reference.

### BACKGROUND OF THE INVENTION

### Field of the Invention

The present technology relates to a battery module and a method of manufacturing the battery module.

### Description of the Background Art

A battery module in which a plurality of battery cells are stacked and restrained by a restraint member has been conventionally known. It has been also conventionally practiced to provide an opening in the restraint member.

Examples of the background art include WO 2016/002178 and WO 2021/024774.

### SUMMARY OF THE INVENTION

By providing the opening in the restraint member, the weight of the battery module can be reduced, but attention needs to be paid as to maintaining strength of the restraint member.

From a point of view different from the above, it is required to attain an efficient step of cutting a metal plate to form a plate-shaped member for the restraint member.

It is an object of the present technology to provide: a battery module that attains both maintained strength and reduced weight; and a method of manufacturing the battery module with an efficient cutting step.

The present technology provides the following battery module and a method of manufacturing the same.
[1] A battery module comprising: a plurality of battery cells arranged side by side in a first direction, each of the plurality of battery cells having a prismatic shape; and two restraint members that each restrain the plurality of battery cells along the first direction, each of the two restraint members being provided to be arranged side by side with the plurality of battery cells in a second direction orthogonal to the first direction, wherein each of the two restraint members includes a plate-shaped portion extending in a plane direction including the first direction and a third direction orthogonal to the first direction and the second direction, and the plate-shaped portion is constituted of a metal member having a rolling line along the third direction, and the plate-shaped portion is provided with an opening.
[2] The battery module according to [1], further comprising a coupling member in a form of a strip, the coupling member extending in the second direction at an intermediate portion in the first direction to couple the two restraint members to each other, wherein the coupling member has a first engagement portion and a second engagement portion that are respectively engaged with the two restraint members in directions of sandwiching the two restraint members along the second direction.
[3] The battery module according to [1] or [2], wherein a first bending-processed portion obtained by bending the metal member from the third direction to the second direction is provided at an end portion of the plate-shaped portion in the third direction.
[4] The battery module according to [3], wherein a second bending-processed portion obtained by bending the metal member from the first direction to the second direction is provided at an end portion of the plate-shaped portion in the first direction, and a bending radius of the first bending-processed portion is smaller than a bending radius of the second bending-processed portion.
[5] The battery module according to any one of [1] to [4], further comprising a case that accommodates the plurality of battery cells, that supports the plurality of battery cells in at least the first direction, and that forms a unit including the plurality of battery cells.
[6] The battery module according to [5], wherein the unit includes two or more battery cells, and each of the two or more battery cells has an output density of 8000 W/L or more.
[7] A method of manufacturing a battery module, the method comprising: forming a stack including a plurality of battery cells arranged side by side in a first direction; cutting a metal plate such that a rolling direction of the metal plate corresponds to a short side direction of the metal plate while feeding the metal plate along the rolling direction; and placing the metal plate having been cut on the stack such that the rolling direction is orthogonal to the first direction and restraining the stack along the first direction by the metal plate.
[8] The method of manufacturing the battery module according to [7], wherein the metal plate is provided with an opening.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a battery module according to an embodiment of the present invention.
Fig. 2 is another perspective view showing the battery module according to the embodiment of the present invention.
Fig. 3 is an exploded assembly diagram showing the battery module in Fig. 1.
Fig. 4 is a perspective view showing an internal structure of the battery module in Fig. 1.
Fig. 5 is a perspective view showing a battery cell unit included in the battery module in Fig. 1.
Fig. 6 is a perspective view showing the battery cell included in the battery cell unit in Fig. 1.
Fig. 7 is a perspective view showing a first cover body.
Fig. 8 is another perspective view showing the first cover body.
Fig. 9 is a perspective view showing a second cover body.
Fig. 10 is another perspective view showing the second cover body.
Fig. 11 is a diagram showing loads applied to a binding bar.
Fig. 12 is a perspective view showing the binding bar and a retainer.
Fig. 13 is an enlarged perspective view showing an engagement portion between the binding bar and the retainer.
Fig. 14 is a flowchart showing steps of manufacturing the battery module.
Fig. 15 is a diagram showing a step of cutting the plate-shaped member.
Fig. 16 is an enlarged perspective view showing a vicinity of an upper flange portion of the binding bar.
Fig. 17 is a front view of the binding bar.
Fig. 18 is an enlarged front view showing a vicinity of a lower flange portion of the binding bar.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium ion battery. In the present specification, the term "electrode" may collectively represent a positive electrode and a negative electrode.

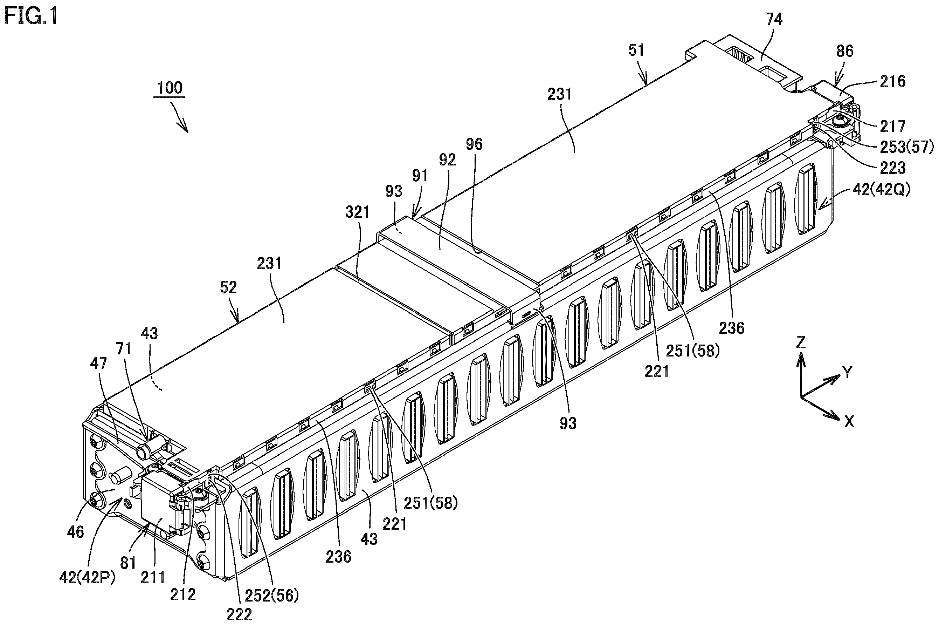

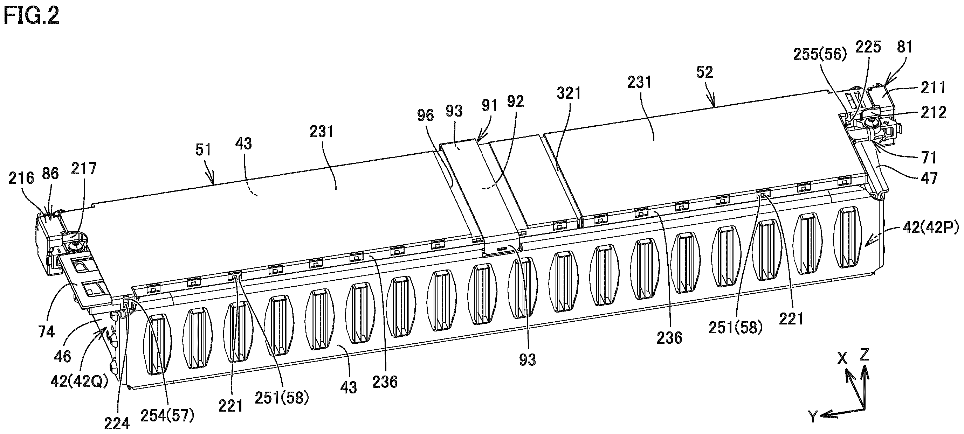

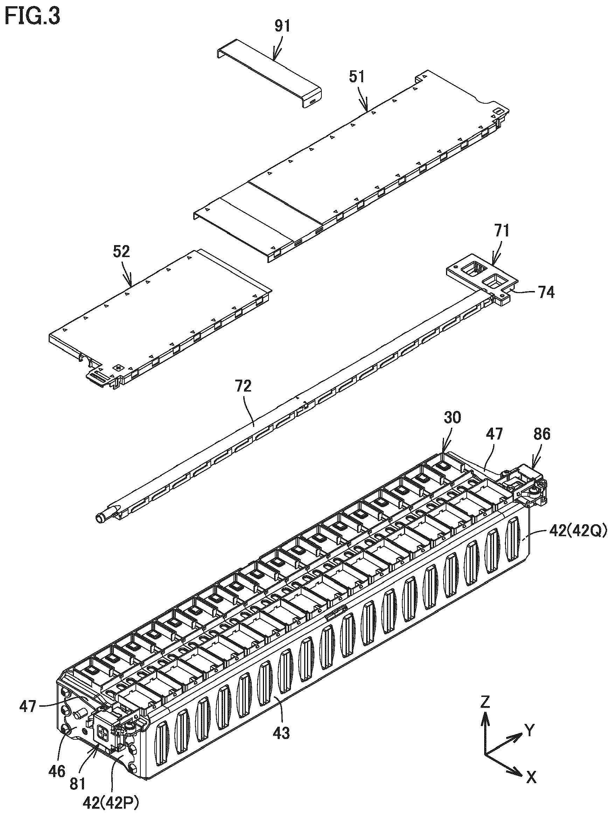

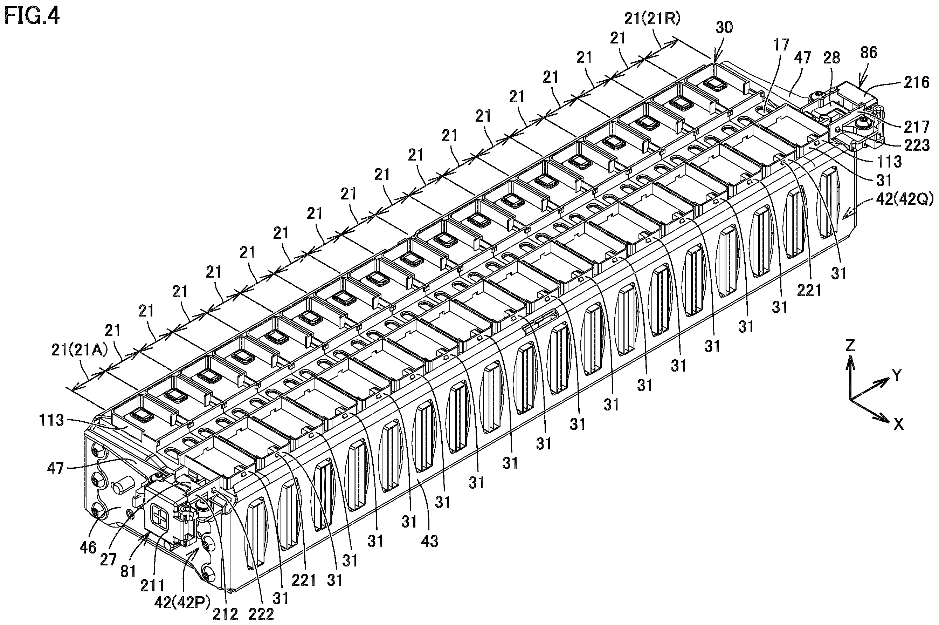

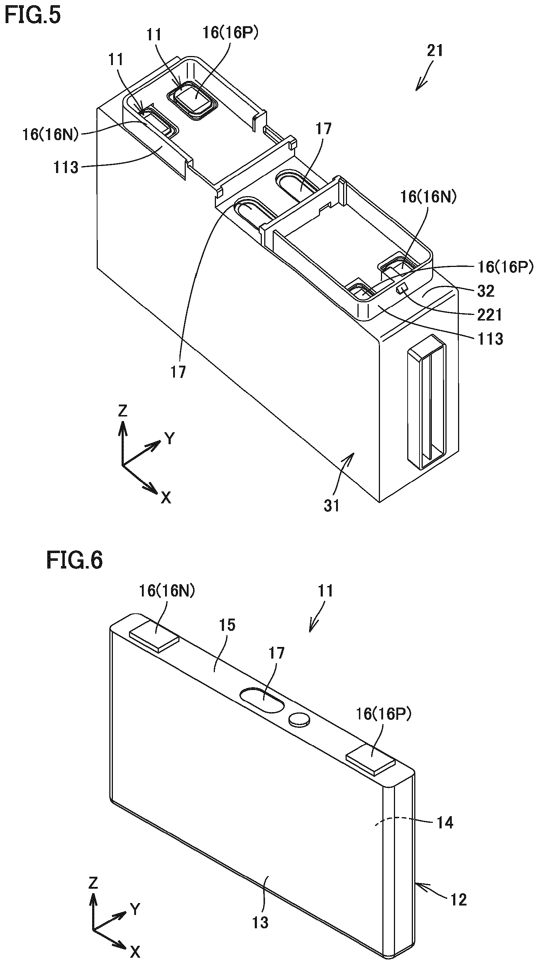

Each of Figs. 1 and 2 is a perspective view showing a battery module according to an embodiment of the present invention. Fig. 3 is an exploded assembly diagram showing the battery module in Fig. 1. Fig. 4 is a perspective view showing an internal structure of the battery module in Fig. 1. Fig. 5 is a perspective view showing a battery cell unit included in the battery module in Fig. 1. Fig. 6 is a perspective view showing the battery cell included in the battery cell unit in Fig. 1.

Referring to Figs. 1 to 6, a battery module 100 is used as a power supply for driving a vehicle such as a hybrid electric vehicle (HEV), a plug-in hybrid electric vehicle (PHEV), or a battery electric vehicle (BEV).

In the present specification, for convenience of description of the structure of battery module 100, the "Y axis" represents an axis extending in parallel with a stacking direction of a plurality of below-described battery cells 11, the "X axis" represents an axis extending in a direction orthogonal to the Y axis, and the "Z axis" represents an axis extending in a direction orthogonal to the Y axis and the X axis. An obliquely rightward upward direction in the plane of sheet of Fig. 1 is "+Y axis direction", and an obliquely leftward downward direction in the plane of sheet of Fig. 1 is "-Y axis direction". An obliquely rightward downward direction in the plane of sheet of Fig. 1 is "+X axis direction" and an obliquely leftward upward direction in the plane of sheet of Fig. 1 is "-X axis direction". An upward direction in the plane of sheet of Fig. 1 is "+Z axis direction" and a downward direction in the plane of sheet of Fig. 1 is "-Z axis direction". Typically, battery module 100 is mounted on a vehicle in such a posture that the +Z axis direction corresponds to the upward direction and the -Z axis direction corresponds to the downward direction.

First, an overall structure of battery module 100 will be described. As shown in Fig. 4, battery module 100 has a plurality of battery cell units 21. The plurality of battery cell units 21 are arranged side by side in the Y axis direction. A battery cell unit 21A is disposed at an end portion in the -Y axis direction, and a battery cell unit 21R is disposed at an end portion in the +Y axis direction.

It should be noted that the number of battery cell units 21 included in battery module 100 is not particularly limited as long as two or more battery cell units 21 are included.

As shown in Figs. 5 and 6, each of battery cell units 21 has a plurality of battery cells 11 and a case body 31.

In each battery cell unit 21, two battery cells 11 are arranged side by side continuously in the Y axis direction. It should be noted that the number of battery cells 11 included in each battery cell unit 21 is not particularly limited as long as a plurality of battery cells 11 are included.

Each of battery cells 11 is a lithium ion battery. Battery cell 11 has an output density of 8000 W/L or more. Battery cell 11 has a prismatic shape and has a thin plate shape in the form of a rectangular parallelepiped. The plurality of battery cells 11 are stacked such that the Y axis direction corresponds to the thickness direction of each battery cell 11.

Each of battery cells 11 has an exterior package 12. Exterior package 12 is constituted of a housing having a rectangular parallelepiped shape, and forms the external appearance of battery cell 11. An electrode assembly and an electrolyte solution are accommodated in exterior package 12.

Exterior package 12 has a cell side surface 13, a cell side surface 14, and a cell top surface 15. Each of cell side surface 13 and cell side surface 14 is constituted of a flat surface orthogonal to the Y axis direction. Cell side surface 13 and cell side surface 14 are oriented oppositely in the Y axis direction. Each of cell side surface 13 and cell side surface 14 has the largest area among the areas of the plurality of side surfaces of exterior package 12. Cell top surface 15 is constituted of a flat surface orthogonal to the Z axis direction. Cell top surface 15 is oriented in the +Z axis direction.

Battery cell 11 further has a gas-discharge valve 17. Gas-discharge valve 17 is provided in cell top surface 15. Gas-discharge valve 17 is provided at the center portion of cell top surface 15 in the X axis direction. When internal pressure of exterior package 12 becomes more than or equal to a predetermined value due to gas generated inside exterior package 12, gas-discharge valve 17 discharges the gas to the outside of exterior package 12. The gas from gas-discharge valve 17 flows through a below-described duct 71 and is discharged to the outside of battery module 100.

Battery cell 11 further has electrode terminals 16 including a pair of a positive electrode terminal 16P and a negative electrode terminal 16N. Electrode terminals 16 are provided on cell top surface 15. Positive electrode terminal 16P and negative electrode terminal 16N are provided on both sides with gas-discharge valve 17 being interposed therebetween in the X axis direction.

Case body 31 has a rectangular parallelepiped appearance. Case body 31 is composed of a resin. In each battery cell unit 21, case body 31 accommodates a plurality of battery cells 11. Case body 31 has a case top portion 32. Case top portion 32 has a wall shape having a thickness direction corresponding to the Z axis direction with case top portion 32 being disposed in parallel with the X-Y axes plane.

As shown in Fig 4, the plurality of battery cells 11 are stacked in the Y axis direction across battery cell units 21 arranged side by side in the Y axis direction. The plurality of battery cells 11 are stacked such that cell side surfaces 13 of battery cells 11 adjacent to each other in the Y axis direction face each other and cell side surfaces 14 of battery cells 11 adjacent to each other in the Y axis direction face each other. Thus, positive electrode terminals 16P and negative electrode terminals 16N are alternately arranged in the Y axis direction in which the plurality of battery cells 11 are stacked. Positive electrode terminal 16P and negative electrode terminal 16N adjacent to each other in the Y axis direction are connected to each other by a bus bar (not shown). Thus, the plurality of battery cells 11 are electrically connected together in series.

As shown in Figs. 1 to 4, battery module 100 further has a pair of end plates 42 (42P, 42Q) and a pair of binding bars 43. The pair of binding bars 43 and the pair of end plates 42 collectively hold the plurality of battery cell units 21 (the plurality of battery cells 11) arranged side by side in the Y axis direction.

The pair of end plates 42 are disposed at both ends beside the plurality of battery cells 11 (the plurality of battery cell units 21) in the Y axis direction. End plate 42P faces battery cell unit 21A in the Y axis direction, and end plate 42Q faces battery cell unit 21R in the Y axis direction.

Each of end plates 42 has a plate portion 46 and a roof portion 47. Plate portion 46 has a plate shape having a thickness direction corresponding to the Y axis direction. Roof portion 47 extends, from an end portion (upper end portion) of plate portion 46 in the +Z axis direction, in a direction away from the stack of battery cells 11 in the Y axis direction. Roof portion 47 has a roof shape having a thickness in the Z axis direction and extending in the form of a strip along the upper end portion of plate portion 46.

The pair of binding bars 43 are disposed at both ends of the stack of battery cells 11 in the X axis direction. Each of binding bars 43 extends in the Y axis direction. An end portion of binding bar 43 in the -Y axis direction is connected to end plate 42P. An end portion of binding bar 43 in the +Y axis direction is connected to end plate 42Q. The pair of binding bars 43 and the pair of end plates 42 apply a restraint force in the Y axis direction onto the plurality of battery cells 11 (the plurality of battery cell units 21).

Battery module 100 further has a positive terminal box 81 and a negative terminal box 86. Each of positive terminal box 81 and negative terminal box 86 is composed of a resin. Positive terminal box 81 and negative terminal box 86 respectively accommodate a positive collective terminal and a negative collective terminal each for connecting battery module 100 to an external wiring such as a cable disposed outside battery module 100.

As shown in Fig. 4, positive terminal box 81 has a base 212 and an openable/closable door 211. Base 212 is attached to end plate 42 (42P). Base 212 is provided over roof portion 47 in the Y axis direction. A bus bar 27 extending from battery cell 11 toward the positive collective terminal is mounted on base 212. Openable/closable door 211 is attached to base 212 so as to be openable and closable. Negative terminal box 86 has a base 217 and an openable/closable door 216. Base 217 and openable/closable door 216 correspond to base 212 and openable/closable door 211 in positive terminal box 81, respectively. A bus bar 28 extending from battery cell 11 toward the negative collective terminal is mounted on base 217.

Battery module 100 further has a duct 71. Duct 71 is composed of a resin. Duct 71 extends in the Y axis direction with duct 71 facing the plurality of battery cells 11 (the plurality of battery cell units 21) in the Z axis direction. Duct 71 forms a path through which gas discharged from each of the plurality of battery cells 11 flows. Duct 71 is attached to a plurality of case bodies 31.

As shown in Fig. 3, duct 71 has a duct main body portion 72 and a connector supporting portion 74. Duct main body portion 72 forms a main part of duct 71 for allowing gas from each battery cell 11 to flow therethrough. Duct main body portion 72 extends in the Y axis direction with duct main body portion 72 facing, in the Z axis direction, the plurality of gas-discharge valves 17 arranged side by side with a space being interposed therebetween in the Y axis direction. Connector supporting portion 74 extends in the +Y axis direction from the end portion of duct main body portion 72 in the +Y axis direction. Connector supporting portion 74 has a shape of plate disposed in parallel with the X-Y axes plane.

Battery module 100 further has a first cover body 51, a second cover body 52, and a retainer 91.

Each of first cover body 51 and second cover body 52 is composed of a resin. First cover body 51 is provided to cover the plurality of battery cells 11 in the Z axis direction. Each of first cover body 51 and second cover body 52 is provided to face case top portions 32 of case bodies 31 in the Z axis direction. Each of first cover body 51 and second cover body 52 is provided to further cover bus bars 27, 28 and duct 71.

Each of first cover body 51 and second cover body 52 each serving as "cover member" is disposed in parallel with the X-Y axes plane. First cover body 51 and second cover body 52 are arranged side by side in the Y axis direction (stacking direction of battery cells 11). First cover body 51 is disposed on the positive side in the Y axis direction, and second cover body 52 is disposed on the negative side in the Y axis direction.

First cover body 51 and second cover body 52 are detachably attached to the plurality of case bodies 31, base 212, base 217, and duct 71. The plurality of case bodies 31, base 212, base 217, and duct 71 constitute an attachment-target member 30 to which first cover body 51 and second cover body 52 are attached.

Retainer 91 is composed of a metal. Retainer 91 extends in the X axis direction. Retainer 91 is connected to the pair of binding bars 43 at its both ends in the X axis direction. Retainer 91 is provided at a central position of the total length of the plurality of battery cells 11 in the Y axis direction. A length between end plate 42P and retainer 91 in the Y axis direction is the same as a length between retainer 91 and end plate 42Q in the Y axis direction.

Retainer 91 has a bar portion 92 and a pair of bent portions 93. Bar portion 92 is constituted of a flat plate that has a thickness direction corresponding to the Z axis direction and that is disposed in parallel with the X-Y axes plane. Bar portion 92 extends in the form of a strip in the X axis direction as its long side direction with an unchanged width in the Y axis direction. Each of the pair of bent portions 93 is bent at 90° from a corresponding one of the both ends of bar portion 92 in the X axis direction and extends in the -Z axis direction. The pair of bent portions 93 are respectively connected to the pair of binding bars 43 by a fitting structure constituted of a combination of claw portions and openings.

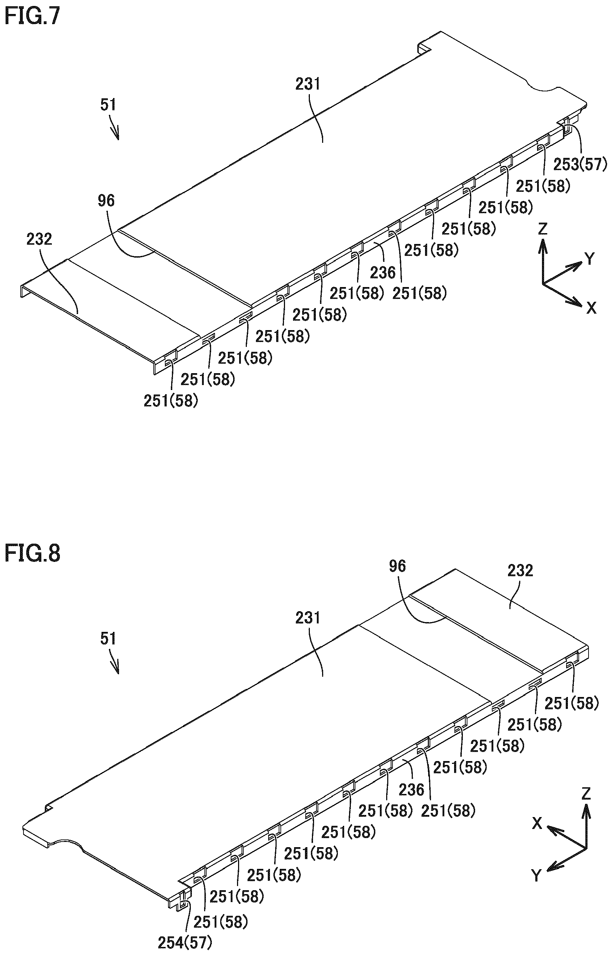

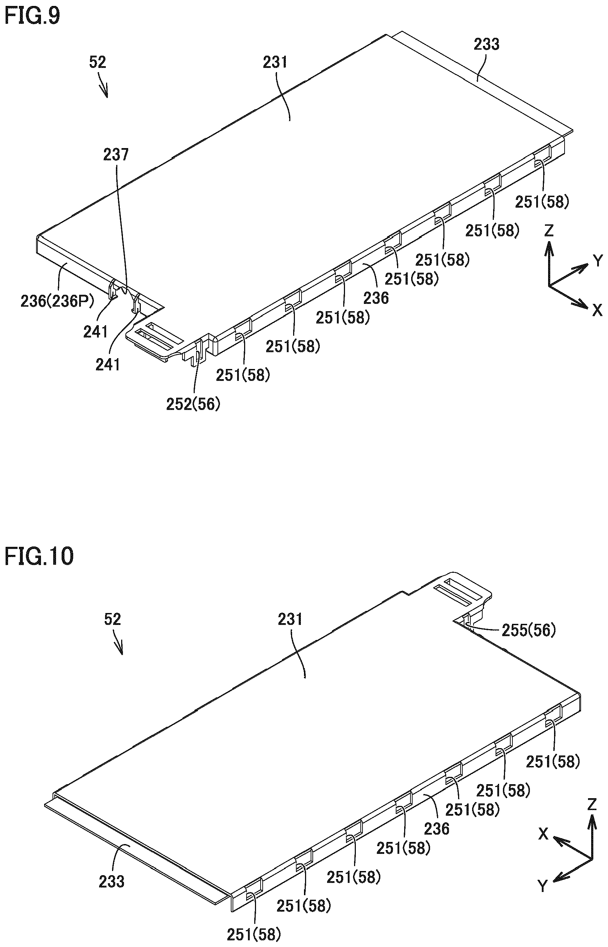

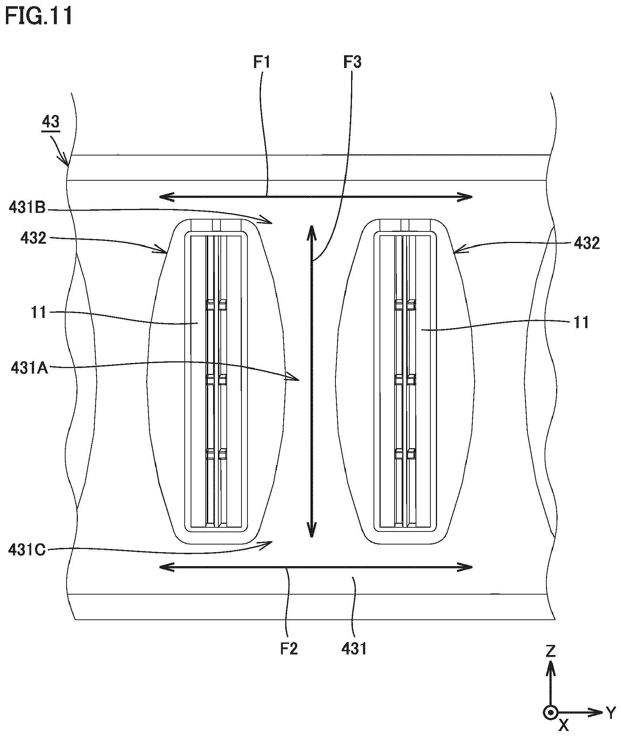

Each of Figs. 7 and 8 is a perspective view showing the first cover body. Each of Figs. 9 and 10 is a perspective view showing the second cover body. Fig. 11 is a cross sectional view of the battery module when viewed in a direction of arrow on a line XI-XI in Fig. 1. Next, a structure of each of first cover body 51 and second cover body 52 will be described more specifically.

Referring to Figs. 1 to 3 as well as Figs. 7 to 11, each of first cover body 51 and second cover body 52 has a flat plate portion 231 and edge portions 236. Flat plate portion 231 has a thickness in the Z axis direction and is disposed in parallel with the X-Y axes plane. Flat plate portion 231 has a quadrangular shape as a whole when viewed in a plan view. Flat plate portion 231 is provided to face the plurality of battery cells 11 (the plurality of battery cell units 21) in the Z axis direction. Each of edge portions 236 extends in the -Z axis direction from a peripheral edge portion of flat plate portion 231. Edge portion 236 has a height in the Z axis direction and intermittently extends along the peripheral edge portion of flat plate portion 231.

The total length of (flat plate portion 231 of) first cover body 51 in the Y axis direction is larger than the total length of (flat plate portion 231 of) second cover body 52 in the Y axis direction.

As shown in Figs. 7 and 8, first cover body 51 has a first overlapping portion 232. First overlapping portion 232 is provided along an end portion of flat plate portion 231 of first cover body 51 in the -Y axis direction. First overlapping portion 232 is a portion of flat plate portion 231 and extends in the form of a strip in the X axis direction with an unchanged width in the Y axis direction.

First cover body 51 is provided with a groove portion 96. Groove portion 96 is recessed in the Z axis direction and extends in the X axis direction. Groove portion 96 is provided in flat plate portion 231 of first cover body 51. Groove portion 96 has a recessed shape that is recessed from a surface of flat plate portion 231 oriented in the +Z axis direction, and extends in the X axis direction with an unchanged width in the Y axis direction. The width of groove portion 96 in the Y axis direction is larger than the width of retainer 91 (bar portion 92) in the Y axis direction.

As shown in Figs. 9 and 10, second cover body 52 has a second overlapping portion 233. Second overlapping portion 233 is provided along an end portion of flat plate portion 231 of second cover body 52 in the +Y axis direction. Second overlapping portion 233 forms a step in the -Z axis direction with respect to flat plate portion 231 by the thickness of flat plate portion 231. Second overlapping portion 233 extends in the form of a strip in the X axis direction with an unchanged width in the Y axis direction.

Referring to Figs. 1 to 3 as well as Fig. 11, second overlapping portion 233 overlaps with first overlapping portion 232. Second overlapping portion 233 is disposed between each battery cell 11 and first overlapping portion 232 in the Z axis direction. First cover body 51 is disposed between each battery cell 11 and retainer 91 (bar portion 92) in the Z axis direction.

First overlapping portion 232 and second overlapping portion 233 are in surface contact with each other in a plane parallel to the X-Y axes plane. A clearance 321 is provided between flat plate portion 231 of second cover body 52 and first overlapping portion 232 of first cover body 51 in the Y axis direction. The end portion of flat plate portion 231 of second cover body 52 in the +Y axis direction faces the end portion of first overlapping portion 232 in the -Y axis direction with clearance 321 being interposed therebetween.

When assembling battery module 100, second cover body 52, first cover body 51, and retainer 91 are assembled in this order to attachment-target member 30. Next, a structure for attaching each of first cover body 51 and second cover body 52 to attachment-target member 30 will be described.

Referring to Figs. 1 and 2 as well as Figs. 7 to 10, first cover body 51 has first connection portions 57. Second cover body 52 has second connection portions 56. At least one of first cover body 51 and second cover body 52 has third connection portions 58.

Each of first connection portions 57 is disposed opposite to second cover body 52 with respect to first overlapping portion 232 in the Y axis direction. First connection portion 57 is provided at an end portion of first cover body 51 in the +Y axis direction. First connection portion 57 is connected to attachment-target member 30 so as to be fixed in the Y axis direction. Each of second connection portions 56 is disposed opposite to first cover body 51 with respect to second overlapping portion 233 in the Y axis direction. Second connection portion 56 is provided at an end portion of second cover body 52 in the -Y axis direction. Second connection portion 56 is connected to attachment-target member 30 so as to be fixed in the Y axis direction.

Each of third connection portions 58 is disposed between first connection portion 57 and second connection portion 56 in the Y axis direction. Third connection portions 58 are provided in first cover body 51 and second cover body 52. Each of third connection portions 58 is connected to attachment-target member 30 so as to be slidable in the Y axis direction.

Referring to Figs. 1 to 5, each of case bodies 31 further has rib portions 113 and claw portions 221.

Each of rib portions 113 extends in the form of a rib so as to protrude from case top portion 32 and surround electrode terminals 16 with rib portion 113 having a height in the Z axis direction. Each of claw portions 221 has a protruding shape protruding in the X axis direction from a side surface of a corresponding one of rib portions 113. Claw portions 221 are provided in an outer side surface of rib portion 113 oriented in the +X axis direction and an outer side surface of rib portion 113 oriented in the -X axis direction. Claw portion 221 has a protruding shape protruding in the +X axis direction in the outer surface of rib portion 113 oriented in the +X axis direction, and claw portion 221 has a protruding shape protruding in the -X axis direction in the outer surface of rib portion 113 oriented in the -X axis direction. In a state in which the plurality of case bodies 31 are arranged side by side in the Y axis direction, the plurality of claw portions 221 are provided with a space being interposed therebetween in the Y axis direction.

Referring to Figs. 1 to 4, base 212 is provided with a claw portion 222 and a claw portion 225. Claw portion 222 is provided in an outer surface of base 212 oriented in the +X axis direction, and has a protruding shape protruding in the +X axis direction. Claw portion 225 is provided in an outer surface of base 212 oriented in the -X axis direction, and has a protruding shape protruding in the -X axis direction. Each of claw portion 222 and claw portion 225 is provided just above end plate 42P. Base 217 is provided with a claw portion 223. Claw portion 223 is provided in an outer surface of base 217 oriented in the +X axis direction, and has a protruding shape protruding in the +X axis direction. Claw portion 223 is provided just above end plate 42Q.

Connector supporting portion 74 of duct 71 is provided with a claw portion 224. Claw portion 224 is provided in an outer surface of connector supporting portion 74 oriented in the -X axis direction, and has a protruding shape protruding in the -X axis direction. Claw portion 224 is provided just above end plate 42Q.

Referring to Figs. 1 and 2 as well as Figs. 7 to 10, first cover body 51 is provided with a plurality of openings 251, an opening 253, and an opening 254. Second cover body 52 is provided with a plurality of openings 251, an opening 252, and an opening 255. The plurality of openings 251, opening 252, opening 253, opening 254 and opening 255 are provided in edge portion 236.

As shown in Figs. 1 and 2 as well as Figs. 7 and 8, opening 253 is provided in a portion of first cover body 51 that covers base 217. Opening 254 is provided in a portion of first cover body 51 that covers connector supporting portion 74. Claw portion 223 and claw portion 224 are fitted to opening 253 and opening 254, respectively. An opening length (width) of opening 253 in the Y axis direction is substantially the same as a length (width) of claw portion 223 in the Y axis direction, and an opening length (width) of opening 254 in the Y axis direction is substantially the same as a length (width) of claw portion 224 in the Y axis direction. Claw portion 223 and claw portion 224 are anchored inside opening 253 and opening 254, respectively, in the Z axis direction and the Y axis direction. With such a configuration, opening 253 and opening 254 constitute first connection portions 57 each connected to attachment-target member 30 (base 217 and connector supporting portion 74) so as to be fixed in the Y axis direction.

As shown in Figs. 1 and 2 as well as Figs. 9 and 10, each of opening 252 and opening 255 is provided in a portion of second cover body 52 that covers base 212. Claw portion 222 and claw portion 225 are fitted to opening 252 and opening 255, respectively. An opening length (width) of opening 252 in the Y axis direction is substantially the same as a length (width) of claw portion 222 in the Y axis direction, and an opening length (width) of opening 255 in the Y axis direction is substantially the same as a length (width) of claw portion 225 in the Y axis direction. Claw portion 222 and claw portion 225 are anchored inside opening 252 and opening 255, respectively, in the Z axis direction and the Y axis direction. With such a configuration, opening 252 and opening 255 constitute second connection portions 56 each connected to attachment-target member 30 (base 212) so as to be fixed in the Y axis direction.

As shown in Figs. 1 and 2 as well as Figs. 7 and 8, first cover body 51 is further provided with the plurality of openings 251. The plurality of openings 251 are arranged side by side with a space being interposed therebetween in the Y axis direction. The plurality of openings 251 are disposed between each of opening 253 and opening 254 (first connection portion 57) and first overlapping portion 232 in the Y axis direction.

As shown in Figs. 1 and 2 as well as Figs. 9 and 10, second cover body 52 is further provided with the plurality of openings 251. The plurality of openings 251 are arranged side by side with a space being interposed therebetween in the Y axis direction. The plurality of openings 251 are disposed between each of opening 252 and opening 255 (second connection portion 56) and second overlapping portion 233 in the Y axis direction.

As shown in Figs. 1 and 2, the plurality of claw portions 221 are fitted to the plurality of openings 251, respectively. An opening length (width) of each opening 251 in the Y axis direction is larger than a length (width) of each claw portion 221 in the Y axis direction. Claw portions 221 are disposed at positions away from the opening edges of openings 251 in the ±Y axis directions. Claw portions 221 are anchored only in the Z axis direction inside openings 251. With such a configuration, the plurality of openings 251 constitute third connection portions 58 each connected to attachment-target member 30 (the plurality of case bodies 31) so as to be slidable in the Y axis direction.

Retainer 91 (bar portion 92) is disposed in groove portion 96. A clearance 326 is provided between an end portion of retainer 91 in the -Y axis direction and a groove wall of groove portion 96 formed by flat plate portion 231 of first cover body 51. A clearance 327 is provided between an end portion of retainer 91 in the +Y axis direction and a groove wall of groove portion 96 formed by flat plate portion 231 of first cover body 51.

Fig. 11 is a diagram showing loads applied to binding bar 43. As shown in Fig. 11, binding bar 43 includes a main body portion 431 and is provided with openings 432 formed in main body portion 431.

The shape of each of openings 432 is defined as a substantially barrel shape. Therefore, the width of a central portion 431A of main body portion 431 between two openings 432 in the Y axis direction is narrower than the width of each of both end portions 431B, 431C between two openings 432 in the Y axis direction.

Binding bar 43 can be fed with loads in various directions due to expansion of battery cell 11 or external loads. Specifically, binding bar 43 can be fed with, for example, loads F1, F2 along the Y axis direction or a load F3 along the Z axis direction.

When the loads are applied in the Y axis direction, loads F1, F2 can be received at portions above or below openings 432 in main body portion 431.

When the load is applied along the Z axis direction, load F3 parallel to the Z axis direction is applied between two openings 432. In this case, load F3 is applied to central portion 431A having the width narrower than those of both end portions 431B, 431C.

A rolling direction of a material in binding bar 43 is along the Z axis direction. Generally, when a metal material having a plurality of crystal grains is rolled, strength of the metal material in the rolling direction is higher than that in a direction orthogonal to the rolling direction. Therefore, even though central portion 431A in the Z axis direction between openings 432 has the narrow width in the Y axis direction, binding bar 43 can satisfy a load bearing characteristic required in central portion 431A.

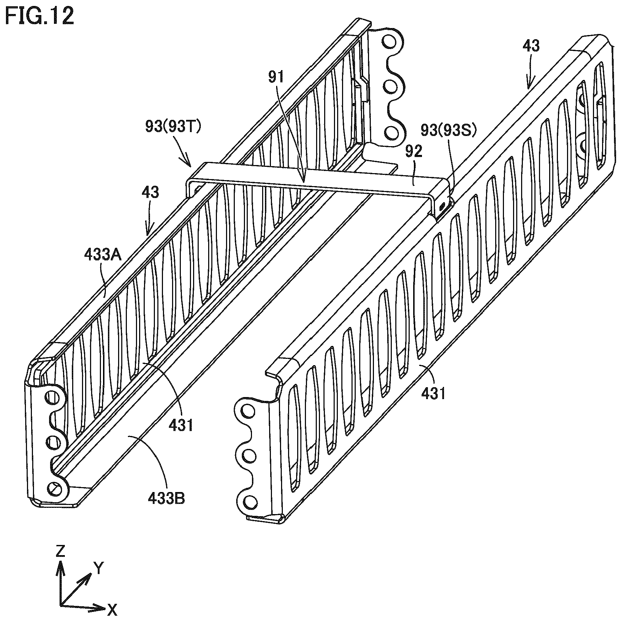

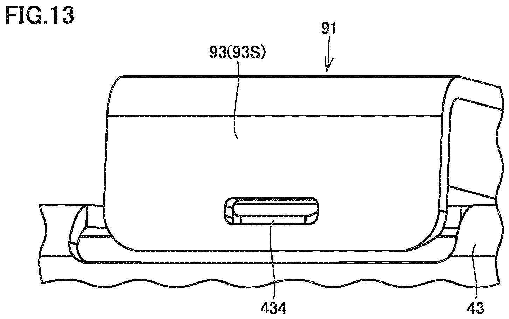

Fig. 12 is a perspective view showing binding bar 43 and retainer 91, and Fig. 13 is an enlarged perspective view showing an engagement portion between binding bar 43 and retainer 91. As shown in Figs. 12 and 13, retainer 91 (coupling member) couples two binding bars 43 (restraint members) to each other at an intermediate portion in the Y axis direction. Bar portion 92 (main body portion) in the form of a strip extends in the X axis direction. As shown in Fig. 1, bar portion 92 is provided at a position overlapping with first cover body 51 on the side (upper side) opposite to battery cell 11.

The pair of bent portions 93 (flange portions) protrude from bar portion 92 in the -Z axis direction. The pair of bent portions 93, i.e., a bent portion 93T (first engagement portion) and a bent portion 93S (second engagement portion) are respectively engaged with two binding bars 43 in directions of sandwiching two binding bars 43 along the X axis direction.

Each of binding bars 43 includes a first flange portion 433A and a second flange portion 433B each protruding from main body portion 431 in the X axis direction. First flange portion 433A is provided to overlap with the upper side (first side in the Z axis direction) of the plurality of battery cell units 21. Second flange portion 433B is provided to overlap with the lower side (second side in the Z axis direction) of the plurality of battery cell units 21. A protruding amount of first flange portion 433A from main body portion 431 is smaller than a protruding amount of second flange portion 433B from main body portion 431.

Retainer 91 is provided on the upper sides of binding bars 43. That is, bent portion 93T (first engagement portion) and bent portion 93S (second engagement portion) of retainer 91 are provided in the vicinity of first flange portions 433A. Specifically, as shown in Fig. 13, an engagement protuberance 434 provided at an upper portion of each binding bar 43 is engaged with the opening provided in bent portion 93 of retainer 91, thereby connecting binding bar 43 and retainer 91 to each other.

Thus, battery module 100 according to the present embodiment employs the following structure: retainer 91, which is constituted of a light-weight plate-shaped member, is provided in the vicinity of first flange portions 433A located on the upper sides of binding bars 43 and two binding bars 43 are coupled to each other in the X axis direction. Thus, the portion that particularly requires improved proof strength for expansion of two binding bars 43 in the X axis direction can be selectively reinforced without impairing the weight reduction of battery module 100.

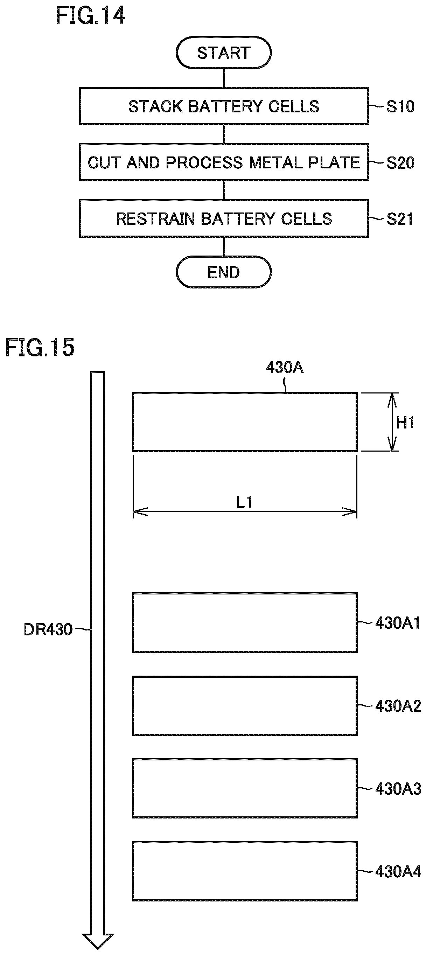

Fig. 14 is a flowchart showing steps of manufacturing battery module 100. As shown in Fig. 14, the method of manufacturing battery module 100 includes: a step (S10) of forming the stack in which battery cell units 21 each including the plurality of battery cells 11 are stacked; a step (S20) of cutting or processing a metal plate that is to form binding bar 43; and a step (S30) of restraining the stack of battery cell units 21 in the Y axis direction by binding bar 43.

Fig. 15 shows a step of cutting a metal plate 430A (plate-shaped member). Referring to Fig. 15, metal plate 430A is fed in a direction of arrow DR430 along a rolling direction thereof. Metal plate 430A is sequentially cut such that a conveying direction thereof, i.e., the rolling direction (direction of rolling line) corresponds to the short side direction thereof, thereby forming metal plates 430A1, 430A2, 430A3, 430A4, ..., . The width of metal plate 430A shown in Fig. 15 in the short side direction is H1 and the width thereof in the long side direction is L1 (> H1).

Metal plate 430A having been cut is subjected to a process (punching process or bending process) to form opening 432, first flange portion 433A, second flange portion 433B, and the like.

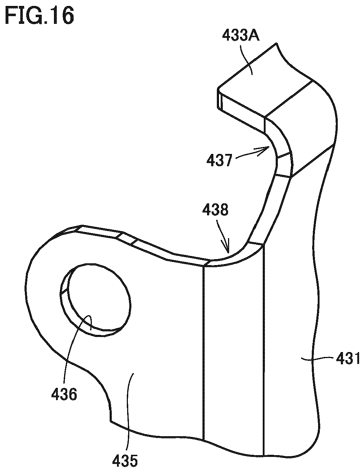

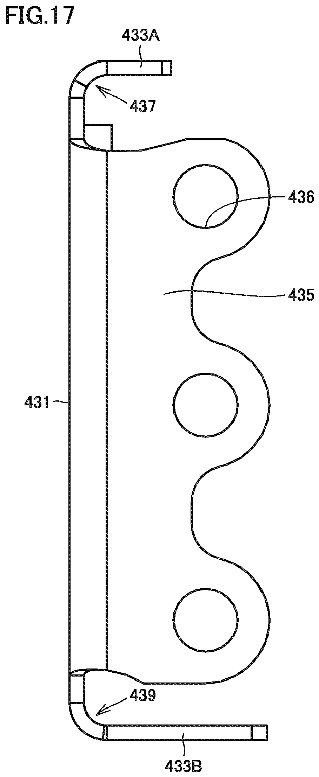

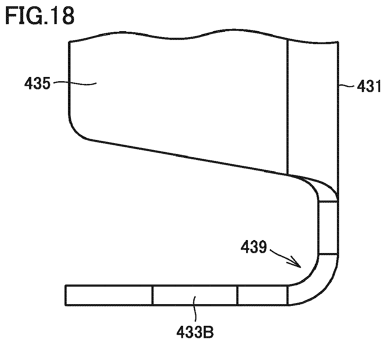

Fig. 16 is an enlarged perspective view showing a vicinity of first flange portion 433A of binding bar 43, Fig. 17 is a front view of binding bar 43, and Fig. 18 is an enlarged front view showing a vicinity of second flange portion 433B of binding bar 43.

As shown in Figs. 16 to 18, bending-processed portions 437, 439 (first bending-processed portions) each obtained by bending the plate-shaped member from the Z axis direction to the X axis direction are provided at the upper end portion and lower end portion in the Z axis direction. In this way, first flange portion 433A and second flange portion 433B are formed.

Further, a bending-processed portion 438 (second bending-processed portion) obtained by bending the plate-shaped member from the Y axis direction to the X axis direction is provided at an end portion in the X axis direction. In this way, third flange portion 435 is formed. Bolt insertion holes 436 are formed in third flange portion 435.

The bending radius of each of bending-processed portions 437, 439 (first bending portions) each obtained by bending the plate-shaped member from the Z axis direction to the X axis direction is smaller than the bending radius of bending-processed portion 438 (second bending portion) obtained by bending the plate-shaped member from the Y axis direction to the X axis direction. As a result, the height of binding bar 43 in the Z axis direction can be suppressed.

When performing the bending process onto the metal plate along the rolling direction, the bending radius can be smaller than that when performing the bending process onto the metal plate along a direction perpendicular to the rolling direction. In battery module 100, since the rolling direction of the metal plate that forms binding bar 43 is the Z axis direction, the bending radius of each of bending-processed portions 437, 439 can be made small, thereby suppressing the height of binding bar 43 in the Z axis direction.

According to battery module 100 of the present embodiment, since main body portion 431 of binding bar 43 is constituted of the metal member having the rolling line along the Z axis direction, it is possible to attain both maintained strength of binding bar 43 and reduced weight of battery module 100. Further, since the cutting is performed such that the conveying direction corresponds to the short side direction of the metal plate in the step of cutting the metal plate, the cutting step can be efficiently performed.

Since two binding bars 43 are coupled to each other in the X axis direction by retainer 91 in the form of a plate, the weight reduction can be attained while improving the proof strength of each binding bar 43. Since retainer 91 is disposed in groove portion 96 provided in first cover body 51, positional displacement of retainer 91 with respect to first cover body 51 can be prevented.

Further, since first overlapping portion 232 and second overlapping portion 233 are slid relative to each other in the Y axis direction, due to expansion or contraction of first cover body 51 and second cover body 52 as caused by a temperature change, with first overlapping portion 232 and second overlapping portion 233 overlapping with each other in the Z axis direction, a clearance can be prevented from being formed between first cover body 51 and second cover body 52, thereby securing a sufficient insulation distance for battery cells 11.

Second overlapping portion 233 of second cover body 52 is disposed between each battery cell 11 and first overlapping portion 232 of first cover body 51, and first cover body 51 is disposed between each battery cell 11 and retainer 91. Therefore, first overlapping portion 232 of first cover body 51 functions as a fixture for fastening second cover body 52 to attachment-target member 30, and retainer 91 functions as a fixture for fastening first cover body 51 to attachment-target member 30. Thus, each of first cover body 51 and second cover body 52 can be more securely prevented from falling off from attachment-target member 30.

Further, clearance 321 is provided between flat plate portion 231 of second cover body 52 and first overlapping portion 232, and each of clearance 326 and clearance 327 is provided between retainer 91 and the groove wall of groove portion 96 formed by flat plate portion 231 of first cover body 51. With such a configuration, first cover body 51 and second cover body 52 can be prevented from interfering with each other in response to a sliding movement of each of first cover body 51 and second cover body 52 in the Y axis direction, and first cover body 51 and retainer 91 can be prevented from interfering with each other in response to the sliding movement of each of first cover body 51 and second cover body 52 in the Y axis direction.

Further, since the total length of first cover body 51 in the Y axis direction is larger than the total length of second cover body 52 in the Y axis direction, retainer 91 overlapping with first cover body 51 in the Z axis direction can be provided at the central position of the total length of the plurality of battery cells 11 in the Y axis direction. Thus, retainer 91 can more efficiently contribute to improvement of rigidity of battery module 100.

Further, each of first connection portion 57 and second connection portion 56 is connected to attachment-target member 30 (base 212, base 217, and connector supporting portion 74) so as to be fixed in the Y axis direction, whereas third connection portion 58 disposed between first connection portion 57 and second connection portion 56 is connected to attachment-target member 30 (the plurality of case bodies 31) so as to be slidable in the Y axis direction. With such a configuration, a sliding movement of each of first cover body 51 and second cover body 52 along the Y axis direction in response to expansion and contraction of each of first cover body 51 and second cover body 52 is permitted while the positions of first cover body 51 and second cover body 52 are kept at the both ends in the Y axis direction. Thus, positional displacement of each of first cover body 51 and second cover body 52 with respect to the plurality of battery cells 11 can be prevented, and deformation of each of first cover body 51 and second cover body 52 or impairment of the state of attachment of each of first cover body 51 and second cover body 52 to attachment-target member 30 can be prevented.

Further, by forming battery cell units 21 that each accommodate the plurality of battery cells 11 in case body 31 with the plurality of battery cells 11 being arranged side by side in the Y axis direction and by forming battery module 100 by arranging the plurality of battery cell units 21 side by side in the Y axis direction, a manufacturing process can be simplified as compared with a case where battery module 100 is manufactured based on each of the plurality of battery cells 11 as one unit.

Further, by forming battery cell units 21 that each accommodate the plurality of battery cells 11 in case body 31, battery module 100 can be readily disassembled or replaced based on each battery cell unit 21 as a unit.

Further, by forming battery cell units 21 that each accommodate the plurality of battery cells 11 in case body 31, battery module 100 can be divided based on each battery cell unit 21 as one unit in order to lower the voltage to be handled when discarding battery module 100. Therefore, battery module 100 can be readily discarded.

Further, since two or more battery cells 11 are included in one unit and each of two or more battery cells 11 is set to have an output density of about 8000 W/L or more, a power supply device having a predetermined voltage or higher can be formed based on each unit.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A battery module comprising:
a plurality of battery cells (11) arranged side by side in a first direction, each of the plurality of battery cells (11) having a prismatic shape; and
two restraint members (43) that each restrain the plurality of battery cells (11) along the first direction, each of the two restraint members (43) being provided to be arranged side by side with the plurality of battery cells (11) in a second direction orthogonal to the first direction, wherein
each of the two restraint members (43) includes a plate-shaped portion (431) extending in a plane direction including the first direction and a third direction orthogonal to the first direction and the second direction, and
the plate-shaped portion (431) is constituted of a metal member (430A) having a rolling line along the third direction, and the plate-shaped portion (431) is provided with an opening (432).

2. The battery module according to claim 1, further comprising a coupling member (91) in a form of a strip, the coupling member (91) extending in the second direction at an intermediate portion in the first direction to couple the two restraint members (43) to each other, wherein
the coupling member (91) has a first engagement portion (93T) and a second engagement portion (93S) that are respectively engaged with the two restraint members (43) in directions of sandwiching the two restraint members (43) along the second direction.

3. The battery module according to claim 1 or 2, wherein a first bending-processed portion (437, 439) obtained by bending the metal member (430A) from the third direction to the second direction is provided at an end portion of the plate-shaped portion (431) in the third direction.

4. The battery module according to claim 3, wherein
a second bending-processed portion (438) obtained by bending the metal member (430A) from the first direction to the second direction is provided at an end portion of the plate-shaped portion (431) in the first direction, and
a bending radius of the first bending-processed portion (437, 439) is smaller than a bending radius of the second bending-processed portion (438).

5. The battery module according to any one of claims 1 to 4, further comprising a case (31) that accommodates the plurality of battery cells (11), that supports the plurality of battery cells (11) in at least the first direction, and that forms a unit (21) including the plurality of battery cells (11).

6. The battery module according to claim 5, wherein the unit (21) includes two or more battery cells (11), and each of the two or more battery cells (11) has an output density of 8000 W/L or more.

7. A method of manufacturing a battery module, the method comprising:
forming a stack including a plurality of battery cells (11) arranged side by side in a first direction;
cutting a metal plate (430A) such that a rolling direction of the metal plate corresponds to a short side direction of the metal plate while feeding the metal plate (430A) along the rolling direction; and
placing the metal plate (430A) having been cut on the stack such that the rolling direction is orthogonal to the first direction and restraining the stack along the first direction by the metal plate (430A).

8. The method of manufacturing the battery module according to claim 7, wherein the metal plate (430A) is provided with an opening (432).
